Europäisches Patentamt

European Patent Office

Office européen des brevets

(11) Veröffentlichungsnummer: **0 209 045**
**A2**

(12) **EUROPÄISCHE PATENTANMELDUNG**

(21) Anmeldenummer: **86109276.5**

(22) Anmeldetag: **07.07.86**

(51) Int. Cl.4: **G21F 5/00**

(30) Priorität: **18.07.85 DE 3525687**

(43) Veröffentlichungstag der Anmeldung:
**21.01.87 Patentblatt 87/04**

(84) Benannte Vertragsstaaten:
**CH DE IT LI**

(71) Anmelder: **KRAFTWERK UNION
AKTIENGESELLSCHAFT
Wiesenstrasse 35
D-4330 Mülheim (Ruhr)(DE)**

(72) Erfinder: **Rau, Peter, Dipl.-Ing.
Mittelehrenbach 89
D-8551 Leutenbach(DE)**
Erfinder: **Mollwitz, Klaus
Am Europakanal 12
D-8520 Erlangen(DE)**
Erfinder: **Hau, Gerhard
Sigmund-Nathan-Strasse 6
D-8510 Fürth(DE)**

(74) Vertreter: **Mehl, Ernst, Dipl.-Ing. et al
Postfach 22 01 76
D-8000 München 22(DE)**

(54) Gasdichter Behälter zum Einschluss von radioaktiven Stoffen.

(57) Ein gasdichter Behälter (1) zum Einschluß von radioaktiven Stoffen hat einen durch den Gasdruck betätigten Balg (8, 9) als Anzeige für die Dichtigkeit des Behälters (1). Der Balg (8, 9) ist Teil eines gasdichten Gefäßes (10), das im Inneren des Behälters (1) angeordnet ist und einen vom Gasdruck im Behälter (1) verschiedenen Innendruck hat. Mit dem Balg (8, 9) ist ein Anzeigeglied (12, 14) verbunden, dessen Stellung durch die Wand des Behälters (1) erfaßt wird.

FIG 1

## Gasdichter Behälter zum Einschluß von radioaktiven Stoffen

Die Erfindung betrifft einen gasdichten Behälter zum Einschluß von radioaktiven Stoffen mit einem durch des Gasdruck betätigten Balg als Anzeige für die Dichtigkeit des Behälters.

Aus der deutschen Offenlegungsschrift 29 44 955 ist es bekannt, daß man eine Metallkapsel zum Einschluß von verbrauchten Brennelementen aus Kernreaktoren mit einem Metallfaltenbalg am Kapselkopf versieht. Da die Kapsel vor dem Verschluß teilweise evakuiert ist, wird der Metallfaltenbalg durch den äußeren Luftdruck auf einen Sitz gedrückt. Bei Verlust des Vakuums, also bei lecker Kapsel, dehnt sich der Balg aufgrund seiner Federwirkung aus und liefert dadurch ein optisch oder anderweitig aufnehmbares Signal.

Solche Metallfaltenbalge sind jedoch empfindliche Bauteile. Deshalb ist die Aufgabe der Erfindung eine Verbesserung der genannten Anzeigemöglichkeit, mit der vermieden wird, daß ein lecker Balg eine Undichtigkeit des gasdichten Behälters bildet. Darüber hinaus soll der Balg selbst mechanisch möglichst geschützt angeordnet sein.

Erfindungsgemäß ist vorgesehen, daß der Balg Teil eines gasdichten Gefäßes ist, das im Inneren des Behälters angeordnet ist und einen vom Gasdruck im Behälter verschiedenen Innendruck aufweist, und daß mit dem Balg ein Anzeigeglied verbunden ist, dessen Stellung durch die Wand des Behälters erfaßt wird.

Durch die Anordnung des mit dem Balg gebildeten gasdichten Gefäßes im Behälter selbst ist der gewünschte mechanische Schutz sichergestellt. Ein defekter Balg stellt auch kein Leck des Behälters dar. Gleichzeitig ermöglicht die erfindungsgemäße Ausbildung aber auch eine Unterscheidung, ob das Gefäß undicht ist oder der Behälter. Damit ist also nicht nur die Kontrolle der Gasdichtigkeit des Behälters selbst sichergestellt, sondern auch noch die Überwachung der Anzeigefunktion.

Der Innendruck im Gefäß kann vorteilhaft kleiner sein als der Gasdruck im Behälter, und zwar unabhängig davon, ob der Behälter gegenüber der Atmosphäre einen Unterdruck oder einen Überdruck aufweist.

Als Anzeigeglied ist ein Dauermagnet besonders geeignet, dessen Stellung durch einen unmagnetischen Wandbereich erfaßt wird. Zur Erfassung kann auf der Außenseite des Behälters ein Weicheisenanker oder ein zweiter Dauermagnet verschiebbar befestigt sein. Dieser Anker oder zweite Dauermagnet wird dann bei Bewegungen des mit dem Balg verbundenen Dauermagneten mitgenommen, die durch Druckänderungen verursacht sind. Die Stellung des Dauermagneten kann aber auch durch Spannungsinduktion in einer gegebenenfalls bewegten Spule erfaßt werden. Darüber hinaus sind zur Erfassung der Stellung durch die Wand des Behälters hindurch auch andere Möglichkeiten vorstellbar. Zum Beispiel kann die Wand mindestens stellenweise aus durchsichtigem Material bestehen. Man kann ferner einen die Behälterwand durchdringenden Ultraschallstrahl oder andere Strahlungen zur Anzeige verwenden.

Zur näheren Erläuterung der Erfindung werden anhand der Zeichnung Ausführungsbeispiele beschrieben. Dabei zeigt die

Figur 1 in einem Teilschnitt durch einen gasdichten Behälter eine Ausführungsform der Erfindung.

Figur 2 einen ähnlichen Teilschnitt mit einer anderen Ausführungsform.

In den Figuren 3 , 4 und 5 sind für eine der Figur 2 ähnliche Ausführungsform drei verschiedene Betriebszustände dargestellt.

In den Figuren 6 , 7 und 8 ist eine ähnliche Ausführungsform für den Fall dargestellt, daß der Behälter einen Überdruck aufweist.

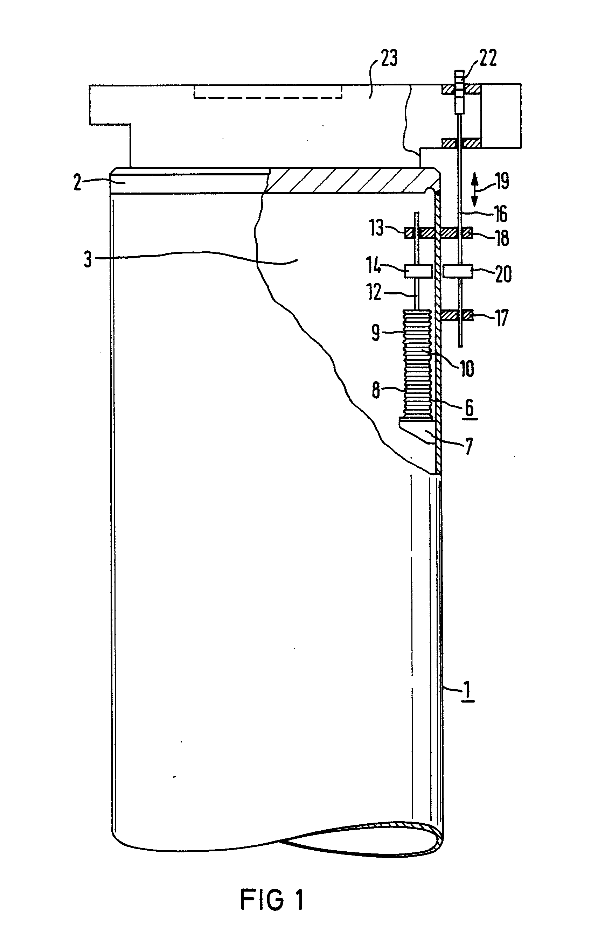

Der in Fig. 1 dargestellte Behälter ist eine zylindrische Büchse 1 aus austenitischem Material, z.B. dem Stahl 1.4541 nach DIN. Die Stirnseiten des Behälters 1 bilden eine gasdicht aufgeschweißte Endplatte 2. Damit entsteht ein gasdichter Innenraum 3. Er kann evakuiert werden. Alternativ kann der Behälter 1 auch mit einem Überdruck versehen werden, z.B. durch das Einfüllen von Stickstoff oder Helium.

Im Innenraum 3 des Behälters 1 sitzt eine Anzeigevorrichtung 6 auf einer Konsole 7, die an der Wand des Behälters angeschweißt ist. Wesentlicher Teil der Anzeigevorrichtung 6 ist ein von zwei miteinander verbundenen Metallbalgen 8 und 9 gebildetes gasdichtes Gefäß 10. Das gasdichte Gefäß 10 trägt an seiner der Konsole 7 abgekehrten Seite einen Anzeigestab 12, der in einer Führung 13 gleitet und einen magnetisch aktiven Körper 14 trägt. Auf der Außenseite des Behälters 1 ist parallel zum Stab 12 eine Stange 16 in zwei Führungen 17 und 18 gelagert, so daß sie in Richtung des Pfeiles 19 verstellbar ist. Die Stange 16 trägt einen magnetisch wirksamen Körper 20, der dem magnetisch aktiven Körper 14 zugeordnet ist. An dem dem Körper 20 abgekehrten Ende der Stange 16 sind optische Markierungen 22 angebracht. Sie werden oberhalb eines Hantierungsflansches 23 sichtbar, der mit der Stirnwand 2 des Behälters 1 verbunden ist.

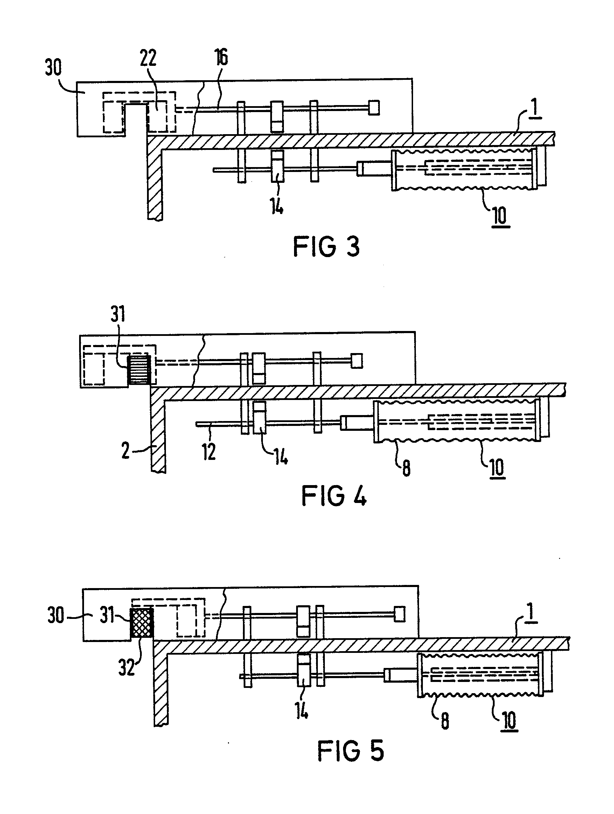

Die magnetisch wirksamen Körper 14 und 20 können zwei Dauermagneten sein, die sich aufgrund der umgekehrten Polarität anziehen. Man kann einem Dauermagneten aber auch einen Weicheisenanker zuordnen, der von dem Dauermagnet mitgenommen wird. In jedem Falle werden durch die Wand des Behälters 1 Bewegungen des Balges 8, 9 erfaßt, die durch Druckänderungen verursacht werden. Die dabei möglichen Druckänderungen werden anhand der Figuren 3 und 4 später erläutert.

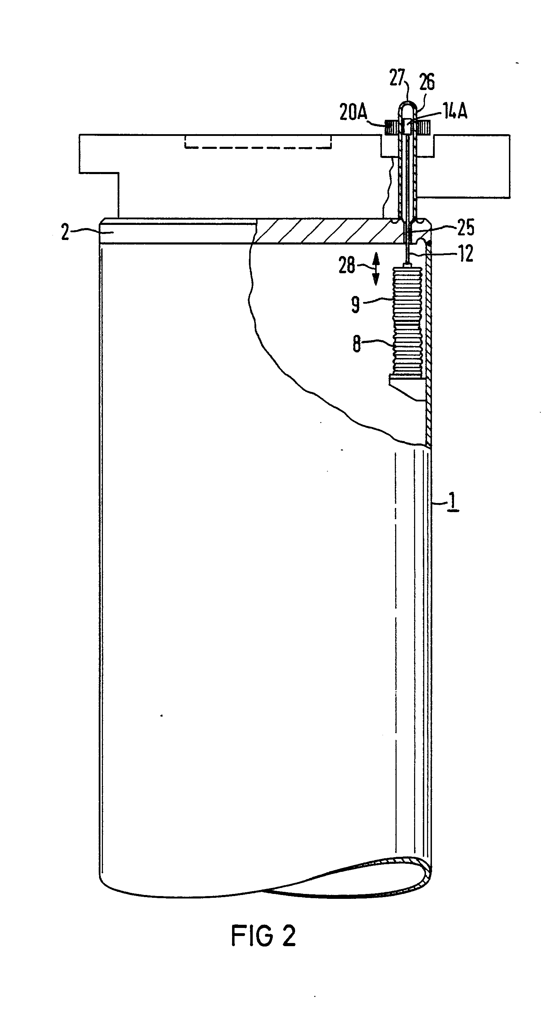

Bei dem Ausführungsbeispiel nach Fig. 2 ist der mit den Balgen 8, 9 verbundene Anzeigestab 12 durch eine Bohrung 25 in der Stirnwand 2 in ein Rohrstück 26 geführt, das auf die Außenseite der Stirnwand 2 aufgeschweißt ist. Das Rohr 26 ist an seinem der Stirnwand 2 abgekehrten Ende zu einer dichten Kappe 27 verschweißt. Deshalb sitzt der Anzeigestab 12 gastechnisch im Inneren des Behälters 1. Er trägt an seinem freien Ende einen magnetisch aktiven Körper 14A, der eine ebenfalls magnetisch aktive optische Markierung 20A mitnimmt, wenn sich der Balg 8, 9 in Richtung des Pfeiles 28 bewegt.

In den Figuren 3, 4 und 5 ist dargestellt, daß in dem Behälter 1 im Normalfall ein Unterdruck von 600 hPa herrscht. Das im Behälter 1 angeordnete Gefäß 10 hat einen kleineren Innendruck, nämlich 400 hPa. Der Druck außerhalb des Behälters 1 ist der normale Luftdruck mit 1000 hPa.

Bei der Stellung nach Fig. 3 sind sowohl der Behälter 1 als auch das Gefäß 10 gasdicht. Deshalb ist die optische Markierung 22, die in Form eines Anzeigereflektors ausgebildet ist, hinter einer Blende 30 versteckt.

Bei dem in Fig. 4 dargestellten Betriebsfall ist angenommen, daß das Gefäß 10 undicht ist. In seinem Inneren herrscht deshalb der Behälterinnendruck von 600 hPa. Der Metallbalg 8, 9 des Gefäßes 10 dehnt sich und schiebt somit den Permanentmagnet 14 an dem Stab 12 in Richtung der Stirnwand 2. Dadurch gerät ein mit der Anzeigestange 16 gekuppelter Anzeigereflektor 22 in den Bereich eines Fensters 31 in der Blende 30. Der nunmehr sichtbare Anzeigereflektor 22 läßt deutlich erkennen, daß die Anzeigevorrichtung 6 defekt ist.

Bei dem Betriebsfall nach Fig. 5 ist angenommen, daß der Behälter 1 defekt ist. Dadurch steigt der Druck im Innenraum 3 des Behälters auf 1000 hPa. Dieser erhöhte Druck verschiebt den Balg 8 des Gefäßes 10 in der Zeichnung nach rechts. Im Fenster 31 der Blende 30 erscheint deshalb ein anders gefärbter oder geformter Anzeigereflektor 32. Dieser macht deutlich, daß der Behälter 1 defekt ist.

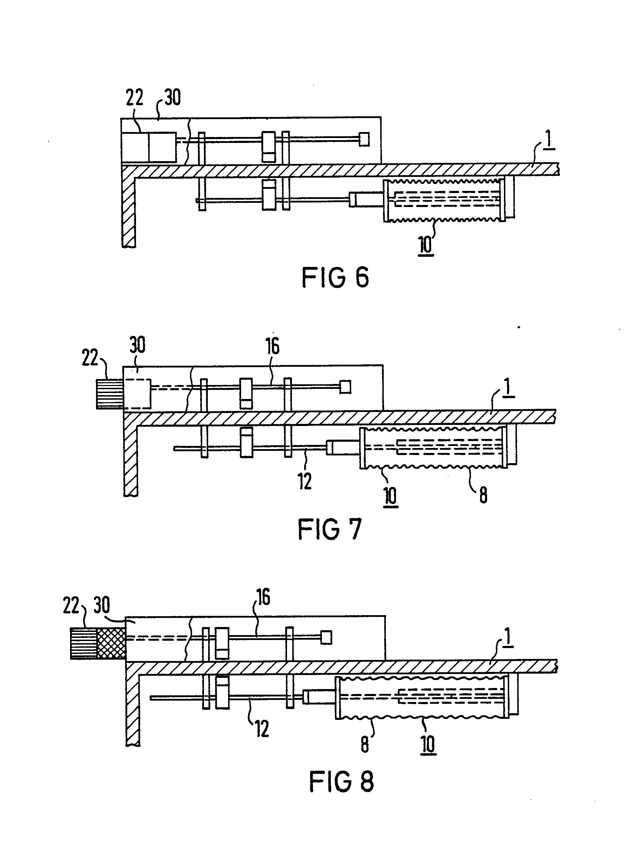

Die in den Figuren 6 bis 8 dargestellten Betriebsfälle gelten für einen Behälter 1, der einen höheren Innendruck als den äußeren Atmosphärendruck hat. Angenommen ist ein Innendruck von 2000 hPa. Im Gefäß 10 ist dagegen ein kleinerer Druck von 1500 hPa vorgesehen.

Wenn der Balg 8 des Gefäßes 10 leck wird, wie in Fig. 7 dargestellt ist, steigt darin der Druck auf den Innendruck des Behälters 1, d.h. auf 2000 hPa. Dies führt zu einer Verschiebung der Anzeigestangen 12 und 16, mit der ein Anzeigereflektor 32 aus der Blende 30 herausgeführt wird.

Bei einer Undichtigkeit des Behälters 1 sinkt der Innendruck auf den äußeren Atmosphärendruck von 1000 hPa. Der Balg 8 des Gefäßes 10 dehnt sich noch weiter aus. Die Anzeigestangen 12 und 16 werden entsprechend noch weiter verschoben. Nunmehr erscheint neben dem Anzeigereflektor 22 ein anders geformter oder gefärbter Anzeigereflektor 30.

Das erfindungsgemäße Konzept des Druckanzeigesystems bietet neben dem Verzicht auf eine Büchsendurchführung zwei weitere Vorteile: es erlaubt erstens zu unterscheiden, ob eine Abweichung von der Sollanzeige tatsächlich auf einem Leck des Behälters 1 oder nur auf einem Defekt des Anzeigesystems 6 beruht. Zweitens ist es möglich, jedes System individuell vor der Montage am Deckel zu prüfen und zu eichen.

## Ansprüche

1. Gasdichter Behälter zum Einschluß von radioaktiven Stoffen mit einem durch den Gasdruck betätigten Balg als Anzeige für die Dichtigkeit des Behälters,

**dadurch gekennzeichnet,**

daß der Balg (8, 9) Teil eines gasdichten Gefäßes (10) ist, das im Inneren (3) des Behälters (1) angeordnet ist und einen vom Gasdruck im Behälter (1) verschiedenen Innendruck aufweist, und daß mit dem Balg (8, 9) ein Anzeigeglied (12, 14) verbunden ist, dessen Stellung durch die Wand des Behälters (1) erfaßt wird.

2. Behälter nach Anspruch 1, **dadurch gekennzeichnet,** daß der Innendruck im Gefäß (10) kleiner als der Gasdruck im Behälter (1) ist.

3. Behälter nach Anspruch 1 oder 2, **dadurch gekennzeichnet,** daß das Anzeigeglied (14) ein Dauermagnet ist, dessen Stellung durch einen unmagnetischen Wandbereich erfaßt wird.

4. Behälter nach Anspruch 3, **dadurch gekennzeichnet,** daß auf der Außenseite des Behälters (1) ein dem Dauermagneten zugeordneter Anker oder zweiter Dauermagnet (20) verschiebbar befestigt ist.

4

FIG 1

FIG 2

FIG 3

FIG 4

FIG 5

FIG 6

FIG 7

FIG 8